## Europäisches Patentamt
## European Patent Office
## Office européen des brevets

(11) Numéro de publication: **0 248 716**
**A1**

## DEMANDE DE BREVET EUROPEEN

(21) Numéro de dépôt: **87401201.6**

(22) Date de dépôt: **27.05.87**

(51) Int. Cl.⁴: **B 60 Q 1/14**
**H 01 H 13/60**

(30) Priorité: **28.05.86 FR 8607643**

(43) Date de publication de la demande:
**09.12.87 Bulletin 87/50**

(84) Etats contractants désignés: **DE ES FR GB IT**

(71) Demandeur: **JAEGER**
**2, rue Baudin**
**F-92303 Levallois-Perret (FR)**

(72) Inventeur: **Rollet, Gérard**
**41 bld de Lorraine**
**F-95240 Cormeilles én Parisis (FR)**

**Gauthier, Christian**
**51, rue Pernety**
**F-75014 Paris (FR)**

(74) Mandataire: **Schrimpf, Robert et al**
**Cabinet Regimbeau 26, Avenue Kléber**
**F-75116 Paris (FR)**

(54) **Commutateur pour vehicules automobiles.**

㊻ La présente invention concerne un commutateur pour véhicules automobiles comprenant une platine 400 qui porte un étrier support 100 à pivotement autour d'un premier axe 102, une manette 200 montée à rotation autour d'un second axe 202 , un tiroir 150 monté à translation dans une première direction 154 et un coulisseau 230 monté à translation dans une seconde direction 232. Le commutateur comprend en outre une biellette 160 reliée au tiroir 150 pour suivre les déplacements à translation de celui-ci dans la première direction et un organe inverseur 170 formant un premier organe de commutation monté à pivotement entre deux positions sur la platine et associé à une paire de cames d'entraînement 182, 183 telle que les cames soient alternativement placées en regard de la biellette selon la position de l'organe inverseur.

FIG-1

EP 0 248 716 A1

**Description**

## COMMUTATEUR POUR VEHICULES AUTOMOBILES.

La présente invention concerne le domaine des commutateurs pour véhicules automobiles.

Plus précisément, la présente invention concerne un commutateur pour véhicules automobiles du type connu en soi comportant une platine qui porte un étrier support à pivotement autour d'un premier axe, une manette montée à rotation sur l'étrier support autour d'un second axe transversal au premier, un organe de commutation principal guidé par la platine et commandé à déplacement par le pivotement de l'étrier support autour du premier axe, pour contrôler un premier type de contacts électriques, et un organe de commutation auxiliaire guidé par la platine et commandé à déplacement par la rotation de la manette autour du second axe pour contrôler un second type de contacts électriques.

De nombreux commutateurs du type précité ont déjà été proposés.

Un premier but de la présente invention est de proposer un commutateur pour véhicules automobiles permettant une commutation automatique et alternative entre deux états, du premier type de contacts électriques, lors des déplacements successifs à pivotement de l'étrier support, autour du premier axe, d'une position stable vers une position instable.

Cette commutation peut par exemple être utilisée pour assurer une inversion automatique code/ phare des feux d'un véhicule automobile à l'aide des entraînements successifs à pivotement , autour du premier axe, de l'étrier support, de la position stable vers la position instable.

Un autre but de la présente invention est de proposer un commutateur pour véhicules automobiles qui assure une réinitialisation automatique du premier type de contacts électriques , dans une position de repos, lorsque les contacts électriques du second type sont portés dans un état déterminé.

Cette disposition permet par exemple d'assurer une réinitialisation automatique en position code des contacts électriques du premier type, contrôlant la commutation code/phare des feux d'un véhicule automobile, lorsque les contacts électriques du second type sont placés dans une position prédéterminée et correspondant à une commande en position feux de ville.

Un autre but de la présente invention est de proposer un commutateur de véhicules automobiles présentant un bruit de fonctionnement très faible.

Un autre but de la présente invention est de proposer un commutateur pour véhicules automobiles précis et donc pratiquement exempt de jeu.

Un autre but de la présente invention est de proposer un commutateur pour véhicules automobiles autorisant la commutation de courant à intensité élevée.

Un autre but de la présente invention est de proposer un commutateur pour véhicules automobiles ne nécessitant pas de raccordement par fils électriques mobiles, ni de soudure à l'étain.

Un autre but de la présente invention est de proposer un commutateur électrique permettant, à l'aide d'une seule manette de commander les indicateurs de changement de direction, des appels phare, une inversion code/phare, une sélection de l'éclairage ville/route et un système avertisseur de véhicules automobiles.

Pour cela, selon un premier aspect, la présente invention propose un commutateur pour véhicules automobiles du type comportant :
- une platine qui porte un étrier support à pivotement autour d'un premier axe,
- une manette montée à rotation sur l'étrier support autour d'un second axe, transversal au premier,
- un tiroir monté à translation sur la platine dans une première direction, et commandé à déplacement dans cette première direction par le pivotement de l'étrier support autour du premier axe, pour contrôler un premier type de contacts électriques,
- un coulisseau formant un second organe de commutation monté à translation sur la platine dans une seconde direction transversale à la première direction, et commandé à déplacement dans cette seconde direction par la rotation de la manette autour du second axe, pour contrôler un second type de contacts électriques,
caractérisé par le fait qu'il comprend en outre :
- une biellette reliée au tiroir pour suivre les déplacements à translation du celui-ci dans la première direction, et
- un organe inverseur formant un premier organe de commutation contrôlant le premier type de contacts électriques, monté à pivotement entre deux positions sur la platine et associé à une paire de cames d'entraînement, telles que les cames soient alternativement placées en regard de la biellette selon la position de l'organe inverseur et que les entraînements successifs à pivotement de l'étrier support, autour du premier axe, portent alternativement la biellette en prise avec l'une ou l'autre des cames pour déplacer l'organe inverseur alternativement entre ses deux positions.

Les entraînements successifs à pivotement de l'étrier support permettent par exemple d'assurer une inversion automatique code/phare.

De préférence, le coulisseau est déplacé en translation dans la seconde direction entre une plage de libération et une plage de blocage, le coulisseau possédant une structure de blocage qui n'autorise le pivotement de l'organe inverseur entre ses deux positions que lorsque le coulisseau est placé dans la plage de libération.

Selon une autre caractéristique avantageuse, la présente invention propose un commutateur pour véhicules automobiles du type comportant :
- une platine qui porte un étrier support à pivotement autour d'un premier axe, une manette montée à rotation sur l'étrier support autour d'un second axe transversal au premier,
- un organe de commutation principal guidé par la platine et commandé à déplacement par le pivotement de l'étrier support autour du premier axe, pour contrôler un premier type de contacts électriques,
- un organ de commutation auxiliaire guidé par la platine et commandé à déplacement par la rotation de la manette autour du second axe pour contrôler un second type de contacts électriques, caractérisé par le fait que le déplacement de l'un des deux organes de commutation est interdit par une structure de blocage prévue sur le second organe de commutation, lorsque ce dernier est placé sur une plage donnée, de blocage, de son déplacement.

Selon une autre caractéristique avantageuse de la présente invention, le premier organe de commutation est déplacé entre une position de repos et une position de travail, le second organe de commutation est déplacé entre une plage de libération dans laquelle le premier organe de commutation peut être déplacé entre la position de repos et la position de travail, et une plage de blocage dans laquelle le premier organe de commutation est immobilisé en position de repos par une structure de blocage solidaire du second organe de commutation, tandis que la structure de blocage est adaptée pour déplacer le premier organe vers la position de repos lorsque le second organe de commutation est déplacé de la plage de libération à la plage de blocage.

De préférence, l'étrier support est monté à pivotement autour du premier axe sur une chape de commande elle-même montée à pivotement sur la platine autour d'un troisième axe, pour contrôler un troisième type de contacts au cours de son pivotement.

De façon avantageuse, selon la présente invention, la manette peut coulisser à translation parallèlement au second axe pour contrôler un quatrième type de contacts au cours de son déplacement.

D'autres caractéristiques, buts et avantages de la présente invention apparaîtront à la lecture de la description détaillée qui va suivre et en regard des dessins annexés donnés à titre d'exemple non limitatif et sur lesquels :

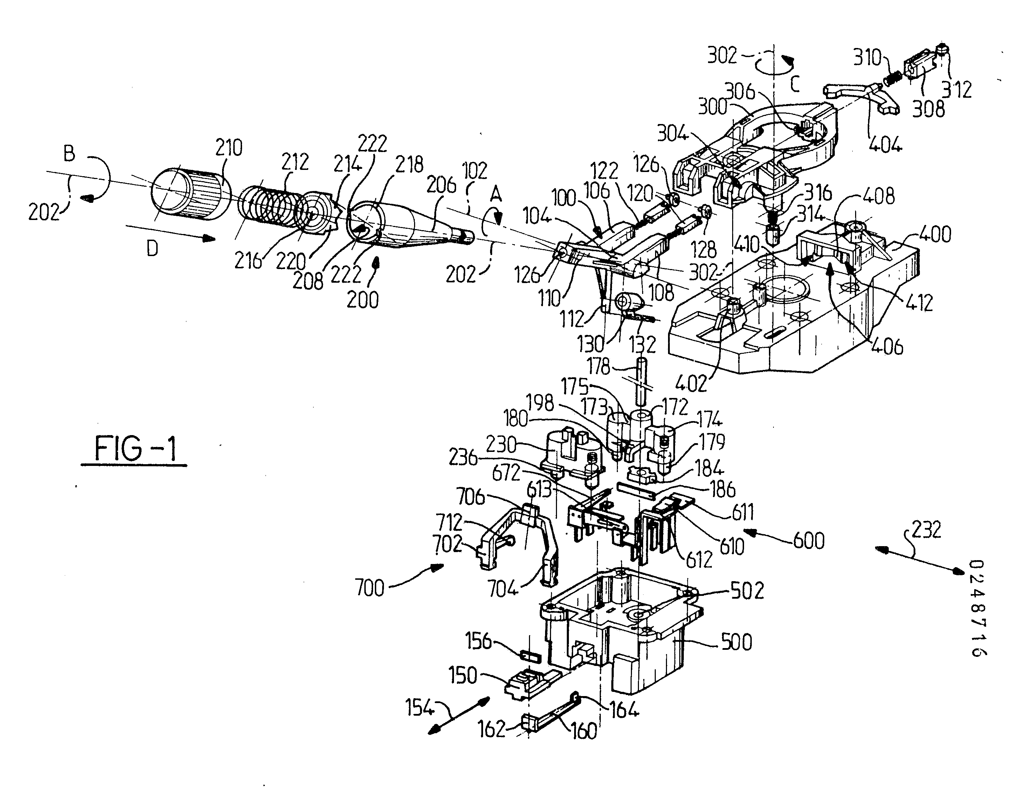

- la figure 1 représente une vue schématique en perspective, et en vue éclatée, d'un commutateur pour véhicules automobiles conforme à la présente invention ;

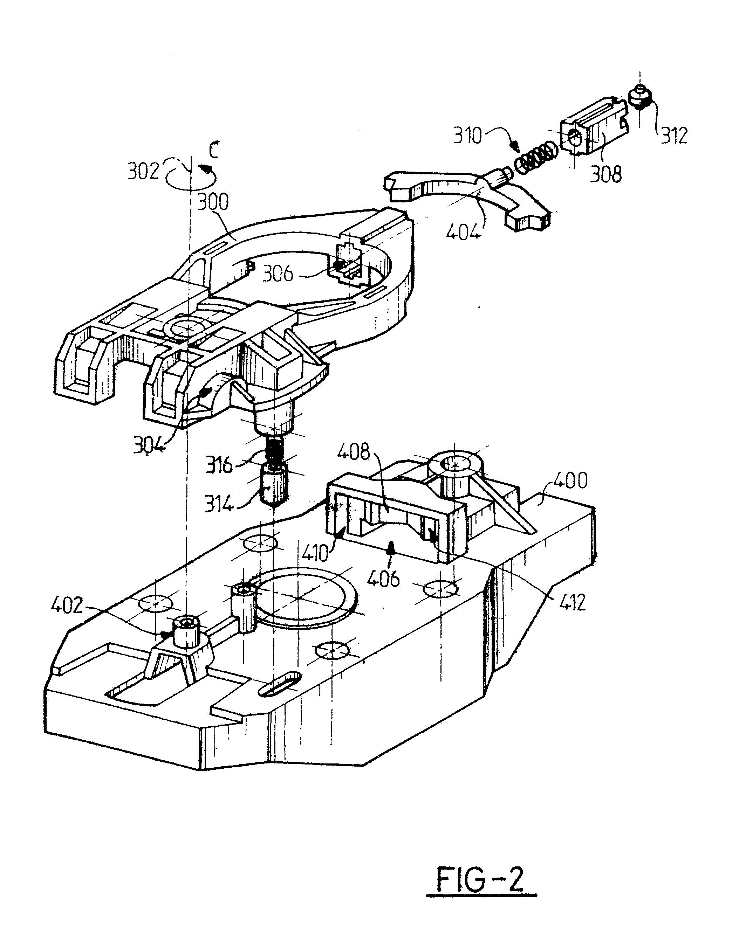

- la figure 2 représente une vue similaire agrandie de la platine et de la chape de commande conformes à la présente invention,

- la figure 3 représente une vue agrandie similaire à la figure 1 de la manette de commande utilisée dans un commutateur pour véhicules automobiles conforme à la présente invention,

- la figure 4 représente une vue agrandie et similaire à la figure 1 des différents organes de commutation,

- la figure 5 représente une vue schématique des différents contacts électriques utilisés dans le commutateur pour véhicules automobiles conforme à la présente invention,

- la figure 6 représente une vue schématique des cames commandant l'organe inverseur,

- les figures 7 représentent schématiquement la coopération du coulisseau et de l'organe inverseur,

- les figures 7a et 7b représentent le coulisseau dans sa plage de blocage, dans deux positions différentes, et l'organe inverseur en position de repos tandis que

- la figure 7c représente le coulisseau dans sa plage de libération et l'organe inverseur dans sa position de travail.

Comme cela est représenté sur les figures annexées, le commutateur pour véhicules automobiles conforme à la présente invention comprend un étrier support 100, une manette 200, une chape de commande 300 et un platine 400.

L'étrier support 100 est porté à pivotement sur la chape de commande 300 autour d'un premier axe 102.

La manette 200 est montée à rotation sur l'étrier support 100 autour d'un second axe 202. Ce second axe 202 est perpendiculaire au premier axe 102 et coupe celui-ci.

Enfin, la chape de commande 300 est montée à pivotement sur la platine 400 autour d'un troisième axe 302. Le troisième axe 302 est transversal au premier et au second axes 102 et 202.

Pour l'essentiel, l'étrier support 100 comprend un tronc de base 104, deux branches parallèles d'indexation 106, 108, un manchon 110 et un doigt de commande 112.

Le tronc de base 104 est coaxial au premier axe 102. Le tronc de base 104 est muni respectivement, à ses extrémités, de portées hémicylindriques 114, 116 reposant dans des logements complémentaires prévus sur la chape 300, tels que référencés en 304, pour guider l'étrier support 100 à pivotement sur la chape 300 autour du premier axe 102.

Les deux branches d'indexation 106, 108 font saillie du tronc de base 104 sensiblement à l'opposé de la manette 200. Chacune des branches d'indexation 106, 108 est munie d'un alésage borgne débouchant sur son extrémité libre. Ces alésages logent des poussoirs d'indexation 118, 120 sollicités vers l'extérieur par des ressorts 122, 124. Les poussoirs 118, 120 portent sur leur extrémité libre des galets 126, 128 d'axes parallèles à l'axe 102 qui se déplacement sur des cames prévues sur la chape de commande 300 pour définir une indexation à pivotement de l'étrier support 100 autour du premier axe 102. Les cames précitées sont de préférence formées de rampes sur lesquelles roulent les galets 126, 128 pour définir une position stable unique de l'étrier 100 et autoriser le déplacement de celui-ci vers une position instable, le rappel de l'étrier 100 vers la position stable étant assuré par les ressorts 122, 124.

Le manchon 110 est monté en saillie sur le tronc de base 104 sensiblement à l'opposé des branches d'indexation 106, 108.

Le manchon 110 possède un alésage interne 126 traversant, coaxial du second axe 202. L'alésage 126 reçoit à rotation une tige 204 appartenant à la manette 200.

Le doigt de commande 112 est porté par le tronc de base 104, sensiblement à mi-longueur de celui-ci et s'étend sensiblement transversalement aux branches d'indexation 106, 108 et au manchon 110.

L'étrier support 100 porte une enveloppe tubulaire 206 possédant un alésage traversant 208 coaxial au second axe 202. L'enveloppe tubulaire 206 guide la manette 200 à pivotement autour de l'axe 202.

La manette 200 comprend un bouton de commande 210, un ressort 212, une couronne crantée 214 et la tige 204 précitée.

La tige 204 est liée à rotation et à translation avec le bouton de commande 210.

Le bouton de commande 210 loge le ressort 212 et la couronne crantée 214.

La couronne crantée 214 est liée à rotation avec la tige 204 mais susceptible de translation par rapport à celle-ci le long de l'axe 202.

Pour cela, la couronne crantée 204 peut être munie de cannelures sur la périphérie de son alésage central 216, cannelures venant en prise avec des dentures correspondantes réalisées sur la périphérie extérieure de la tige 204.

Le ressort 212 sollicite la couronne crantée 214 en appui contre la surface avant 218 de l'enveloppe tubulaire 206, qui s'étend transversalement à l'axe 202 et dirigée à l'opposé de l'étrier 100.

La couronne crantrée 214 est munie sur sa face transversale à l'axe 202 dirigée vers l'étrier 100 de dentelures 220. Ces dentelures 220 viennent en prise avec des dents d'indexation 222 réalisées sur la surface 218 précitée de l'enveloppe tubulaire 206.

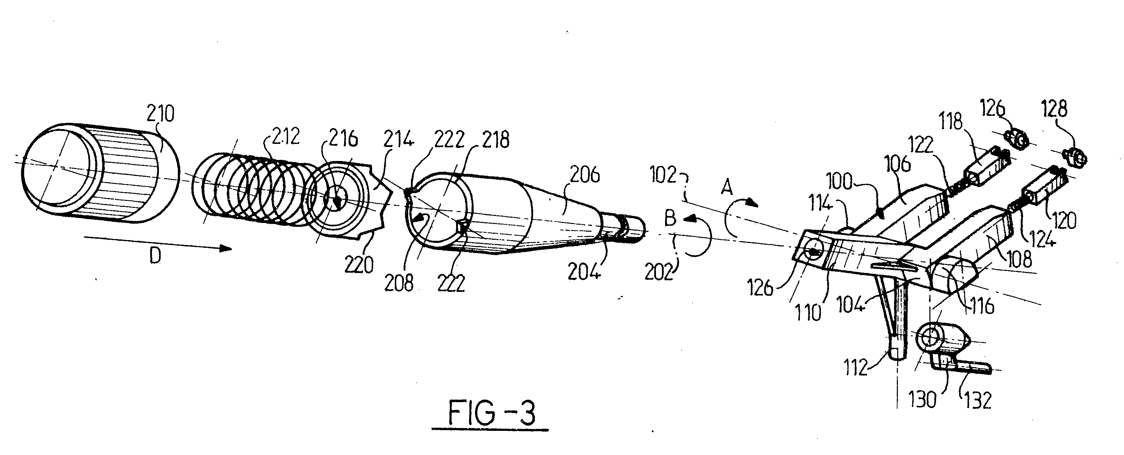

L'homme de l'art comprendra aisément à la lecture de la description détaillée qui précède et à l'examen de la figure 3 que la coopération des dentelures 220 et des dents 222, sollicitée par le ressort 212, définit une indexation à pivotement du bouton 210 et de la tige 204 de manette autour de l'axe 202. Cette indexation assure des positions stables à la manette.

La tige 204 est munie à son extrémité interne au dispositif de commutation, c'est-à-dire à son extrémité opposée au bouton 210 et placée au-delà de l'étrier 100 après traversée de l'alésage 126 prévu dans le manchon 110, d'une douille 130. Cette douille 130 est fixée à rotation et à translation sur l'extrémité précitée de la tige 204.

La douille 130 porte un téton de commande 132 s'étendant parallèlement à l'axe 202 et excentré par rapport à celui-ci.

La platine 400 supporte sur sa surface inférieure un carter 500.

Le carter 500 est équipé d'une pluralité de connexions 600 qui seront décrites par la suite.

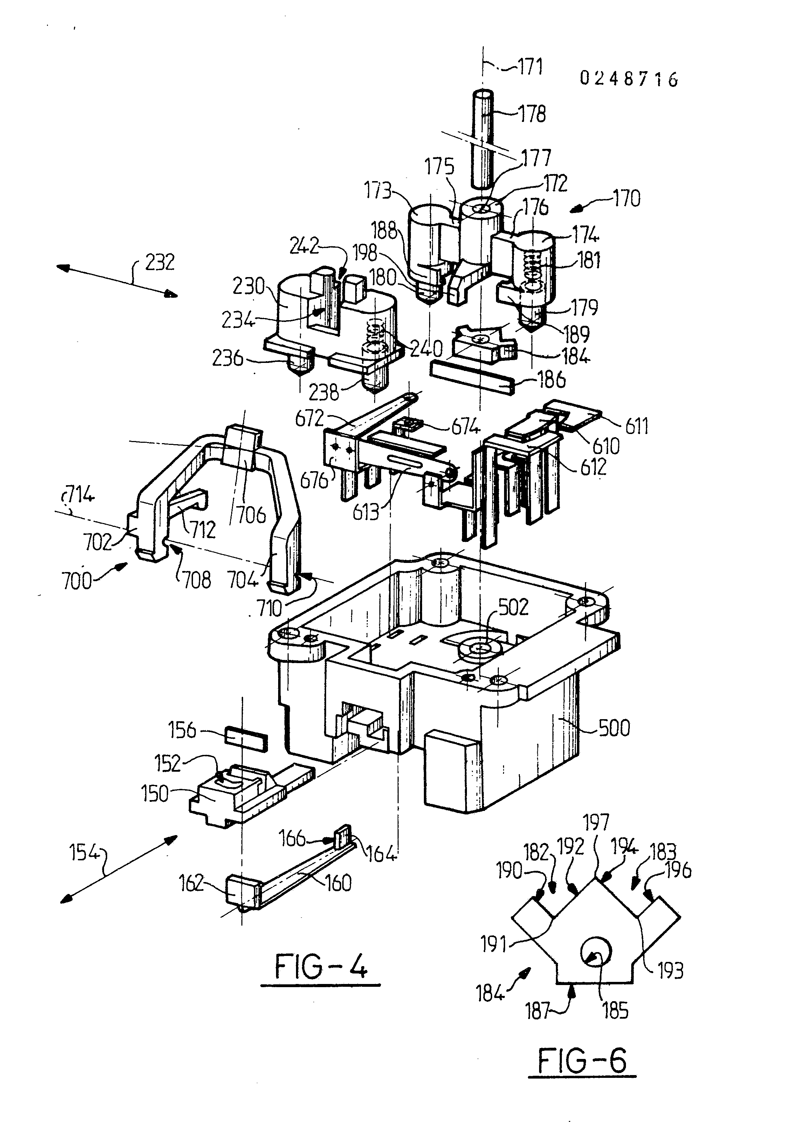

Le carter 500 guide un tiroir 150 à translation dans une première direction référencée 154 sur la figure 4. Selon la représentation donnée sur les figures, cette première direction 154 de coulissement du tiroir 150 est orthogonale au troisième axe 302 et généralement transversale au premier axe 102.

Le tiroir 150 est muni sur sa surface supérieure d'une rainure 152 généralement cylindrique centrée sur le troisième axe 302.

La rainure 152 est destinée à recevoir le doigt de commande 112 prévu sur l'étrier 100.

Ainsi, le pivotement de l'étrier 100 autour du premier axe 102 induit un déplacement du tiroir 150 à translation dans la direction 154. Par contre, un pivotement de la chape de commande 300 et de l'étrier 100 et de la manette 200 associés, autour du troisième axe 302, entraîne un déplacement du doigt de commande 112 dans la rainure 152, sans induire un déplacement du tiroir 150.

La carter 500 reçoit également une biellette 160. La beillette 160 s'étend sensiblement parallèlement à la première direction 154.

Elle est munie de moyens 162 permettant de la relier au tiroir 150 pour suivre les déplacements à translation de celui-ci induits par le pivotement de l'étrier 100 autour de l'axe 102.

A son extrémité libre opposée au tiroir 150 la biellette 160 porte une dent 164 destinée à coopérer avec un organe inverseur 170.

Ce dernier est porté à pivotement sur le carter 500 autour d'un axe 171 s'étendant parallèlement à l'axe 302 précité de pivotement de la chape de commande 300.

Pour l'essentiel, l'organe inverseur 170 est formé de trois blocs cylindriques 172, 173, 174 d'axes parallèles entre eux et parallèles à l'axe 171 précité, reliés par des pontets 175, 176.

Le bloc central 172 est muni d'un alésage traversant 177 coaxial à l'axe 171 et recevant un tourillon 178. Le tourillon 178 vient en prise avec le carter 500 en 502 pour guider l'organe inverseur 170 à pivotement autour de l'axe 171.

L'organe inverseur 170 est équipé d'un plot de contact 179 et d'un poussoir d'indexage 180.

Ces derniers sont logés dans des alésages borgnes réalisés dans les blocs latéraux 173, 174 de l'organe inverseur 170 et débouchant sur la surface inférieure de celui-ci.

Le plot de contact 179 et le poussoir d'indexage 180 sont sollicités vers l'extérieur des alésages borgnes précités par des ressorts, tels que le ressort référencé 181 sur la figure 4.

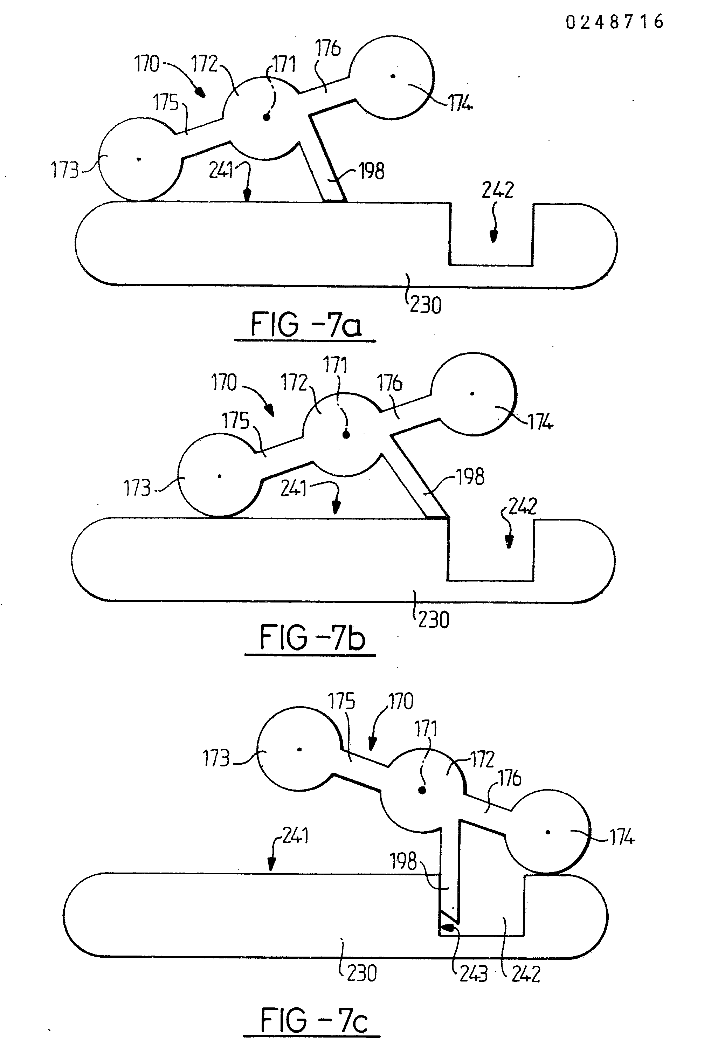

Le poussoir d'indexage 180 se déplace sur des cames ménagées dans une paroi du carter 500 pour définir deux positions stables de l'organe inverseur, autour de l'axe 171. De préférence le poussoir d'indexage 180 définit une position de repos, illustrée sur les figures 7a et 7b, et une position de travail illustrée sur la figure 7c.

Le plot de contact 179 se déplace sur des lamelles de connexion, comme cela sera décrit par la suite.

L'organe inverseur 170 est associé à une paire de cames 182, 183 coopérant avec la dent 164 prévue sur la biellette 160.

Les cames 182, 183 sont positionnées de façon à être alternativement placées en regard de la dent 164 de la biellette, selon la position de l'organe inverseur 170 autour de son axe 171.

Le cas échéant, les cames 182, 183 pourraient être solidaires de l'organe inverseur 170.

Selon la représentation donnée sur la figure 4, les cames 182, 183 sont formées sur une pièce 184 séparée de l'organe inverseur 170.

Cette pièce 184 est munie d'un alésage traversant 185 destiné à recevoir le tourillon 178. Ainsi la pièce 184 est portée également à pivotement autour de l'axe 171.

De plus, l'organe inverseur 170 porte une lame élastique 186 qui vient en appui contre une surface plane coopérante 187 prévue sur la pièce 184.

Grâce à la sollicitation élastique exercée par la lame 186 sur la pièce 184, cette dernière suit souplement les déplacements à pivotement de l'organe inverseur 170 autour de l'axe 171 et inversement.

Par ailleurs, la pièce 184 peut pivoter librement autour de l'axe 171 lorqu'une sollicitation à pivotement est exercée sur cette pièce par la biellette 160, même si l'organe inverseur 170 est bloqué à pivotement, comme cela sera décrit par la suite, en induisant alors une déformation de la lame 186.

Selon la représentation donnée sur les figures annexées, la lame 186 et la surface plane coopérante 187 s'étendent parallèlement aux axes 171 et 302. La lame 186 est immobilisée par ses extrémités sur des structures 188, 189 ménagées sur l'organe inverseur 170.

De façon généralement similaire, une lame élastique 156 portée par le tiroir 150 vient en appui contre la structure 162 de la biellette 160. La lame élastique 156 sollicite la biellette 160 vers une position de repos (représentée schématiquement sur les figures) dans laquelle la biellette 160 s'étend parallèlement à la direction de translation 154 précitée.

Les cames 182, 183 sont diposées entre la structure 162 et la dent de commande 164 prévue sur la biellette 160.

Chacune des cames 182, 183 présente une concavité dirigée vers la dent 164. Les cames 182, 183 sont profilées parallèlement à l'axe 171. C'est-à-dire que les cames 182, 183 présentent une section constante dans tous plans de coupe perpendiculaires à l'axe 171.

Plus précisément, chaque came 182, 183 est définie par deux plans 190, 192 d'une part, 194, 196 d'autre part, qui divergent en direction de la dent 164.

Les fonds des cames correspondant à la zone de convergence des plans précités 190, 192 d'une part, et 194, 196 d'autre part, sont référencés 191, 193 sur la figure 6.

Le sommet des cames, disposé dans le plan de symétrie de la pièce 184 et correspondant à la zone d'intersection des plans 192, 194 appartenant respectivement aux cames 182, 183 est référencé 197 sur la figure 6.

La position de fixation de la pièce 184 sur l'organe inverseur 170 ainsi que la position du plot d'indexage 180 sont déterminées de telle sorte que le sommet 197 précité des cames soit disposé respectivement de part et d'autre d'un plan passant par l'axe de la biellette, en position de repos de celle-ci (plan également parallèles aux axes 171 et 302), selon que l'organe inverseur est placé en position de repos (figures 7a et 7b) ou en position de travail (figure 7c).

Ainsi, l'arête 166 de la dent 164 dirigée vers les cames, vient reposer alternativement contre les plans précités 192, 194 des cames, lorsque l'étrier de commande 100 est déplacé à pivotement autour de l'axe 102 et de là induite une translation du tiroir 150 et de la biellette 160, telle que la dent 164 se rapproche des cames 182, 183.

Lorsque le mouvement de pivotement de l'étrier 100 autour de l'axe 102 est prolongé, l'arête 166 de la dent 164 glisse contre les surfaces 192, 194 des cames vers le fond 191, 193 de celles-ci. Ce déplacement s'accompagne d'un léger pivotement de la biellette 160 alternativement de part et d'autre de la direction 154. Ce pivotement de la biellette 160 est autorisé par la lame souple 156.

Par la suite, la biellette 160 exerce un couple de rotation autour de l'axe 171, sur la pièce 184, alternativement dans un sens puis dans l'autre, selon la came 182 ou 183 placée en regard de la dent 164, pour faire basculer la pièce 184 et l'organe inverseur 170, entre ses deux positions autour de l'axe 171.

Le plot de contact 179 se déplace de préférence sur des lames de connexion pour assurer une inversion électrique des fonctions code/phare.

De plus, le carter 500 guide un coulisseau 230 à translation dans une direction référence 232 sur les figures. Cette direction 232 s'étend perpendiculairement à la direction 154 de translation du tiroir 150 et perpendiculairement à l'axe 171 de pivotement de l'organe inverseur.

Le coulisseau 230 possède une cavité 234 qui reçoit le téton de commande 132 solidaire de la manette 200.

Ainsi, la rotation de la manette 200, et plus précisément du bouton 210 et de la tige 204, autour de l'axe 202, porte le téton de commande 132 en appui contre les parois latérales de la cavité 234 pour assurer un déplacement du coulisseau 230 dans la direction de translation 232.

Le coulisseau 230 est muni de deux alésages borgnes qui débouchent sur sa surface inférieure dirigée vers les connexions 600.

Ces alésages logent deux plots de contact 236, 238 sollicités vers l'extérieur, c'est-à-dire vers les connextions 600, par l'intermédiaire de ressorts, tels que le ressort référencé 240 sur les figures.

Ces plots 236, 238 peuvent coopérer avec des connexions 600 pour assurer une sélection du mode d'éclairage : arrêt/ville/route.

De plus, le coulisseau 230 est muni sur sa surface 241 faisant face à l'organe inverseur 170 et parallèle à l'axe 171, d'une cavité 242 dirigée vers l'inverseur 170 et coopérant avec une protubérance 198 solidaire de l'organe inverseur 170. La surface 241 et la cavité 242 constituent la structure de blocage précitée.

Plus précisément, la cavité 242 est positionnée de telle sorte que la surface 241 du coulisseau 230 serve de butée à la protubérance de l'inverseur 170 pour interdire le pivotement de ce dernier, lorsque le coulisseau se trouve sur une plage de blocage dans son déplacement dans la direction de translation 232 comme représenté sur les figures 7a et 7b. Par contre, la protubérance 198 peut se déplacer librement dans la cavité 242 quand le coulisseau 230 est placé dans une plage de libération , dans son déplacement dans la direction de translation 232, comme représenté sur la figure 7c.

Par ailleurs, la tige 204 et le bouton 210 peuvent coulisser parallèlement à l'axe 202, à l'encontre de la sollicitation élastique exercée par le ressort 212.

Le carter 500 porte une palette 700 à pivotement autour d'un axe 714 transversal aux axes 102 et 302.

La palette 700 est formée de deux branches 702, 704 généralement parallèles , et d'une âme transversale 706 en forme de U.

Les branches 702, 704 s'étendent sensiblement parallèlement aux axes 171 et 302. Le pivotement de la palette 700 sur le carter 500 est assuré de préférence par des portées 708, 710 définies sur les extrémités libres des branches 702, 704 et venant reposer contre des tructures complémentaires solidaires du carter 500.

L'âme 706 est placée en regard de l'extrémité de la tige 204 interne au dispositif de commutation supportant la douille 130.

Une branche 712 s'étendant sensiblement parallèlement à la direction de translation 154 est solidaire de l'une des branches 702.

Cette aile 712 repose contre une lame souple 672. La translation de la manette 210, 204 parallèlement à l'axe 202 induit un pivotement de la palette 700 autour de l'axe 714, et, à l'aide de l'aile 712, amène la lame souple 672 en contact avec une connexion d'avertisseur 674.

La chape 300 est portée à pivotement sur la platine 400 autour de l'axe 302 par un tourillon 402.

La chape 300 porte un pontet de rappel 404. Elle est de plus munie d'un alésage traversant 306 s'étendant perpendiculairemnt à l'axe 302. L'alésage 306 loge un poussoir 308 sollicité vers l'extérieur de l'alésage 306 par un ressort 310. Le poussoir 308 est muni à son extrémité libre d'un galet 312 d'axe parallèle à l'axe 302. Le galet 312 se déplace sur des cames 406, réalisées sur la platine 400 pour définir une indexation de la chape 300 lors de son pivotement autour de l'axe 302.

La chape 300 est munie d'un alésage borgne que débouche sur sa surface inférieure. Cet alésage borgne loge un plot de contact 314 sollicité vers l'extérieur de l'alésage précité par un ressort 316. Le plot 314 se déplace sur des lames de connexion 600 pour assurer une commutation de la commande des avertisseurs lumineux de changement de direction d'un véhicule automobile.

De préférence le système de cames 406 comprend une came centrale 408 et deux cames latérales 410, 412.

Les cames 408, 410 et 412 possèdent une concavité dirigée vers le poussoir 308 et le galet 312.

Lorsque le galet 312 repose contre le fond de la came centrale 408, la chape 300 est placée en position de repos stable.

Lorsque le galet 312 se déplace sur la came centrale 408, de part et d'autre de sa position centrale de repos, il définit deux positions instables pour la chape 300, le rappel de celle-ci vers la position de repos étant assuré par le ressort 310.

Enfin, lorsque le galet 312 atteint les cames latérales 410, 412 il définit deux positions stables pour la chape de commande 300.

Sur les figures annexées, on a schématisé par la flèche référencée A le mouvement de pivotement de l'étrier support 100 autour du premier axe 102, par la flèche référencée B, le mouvement de pivotement de la manette 200 autour du second axe 202 par la flèche référencée C le pivotement de la chape de commande 300 autour du troisième axe 302, et par la flèche référencée D la translation de la manette 200 parallèlement au second axe 202.

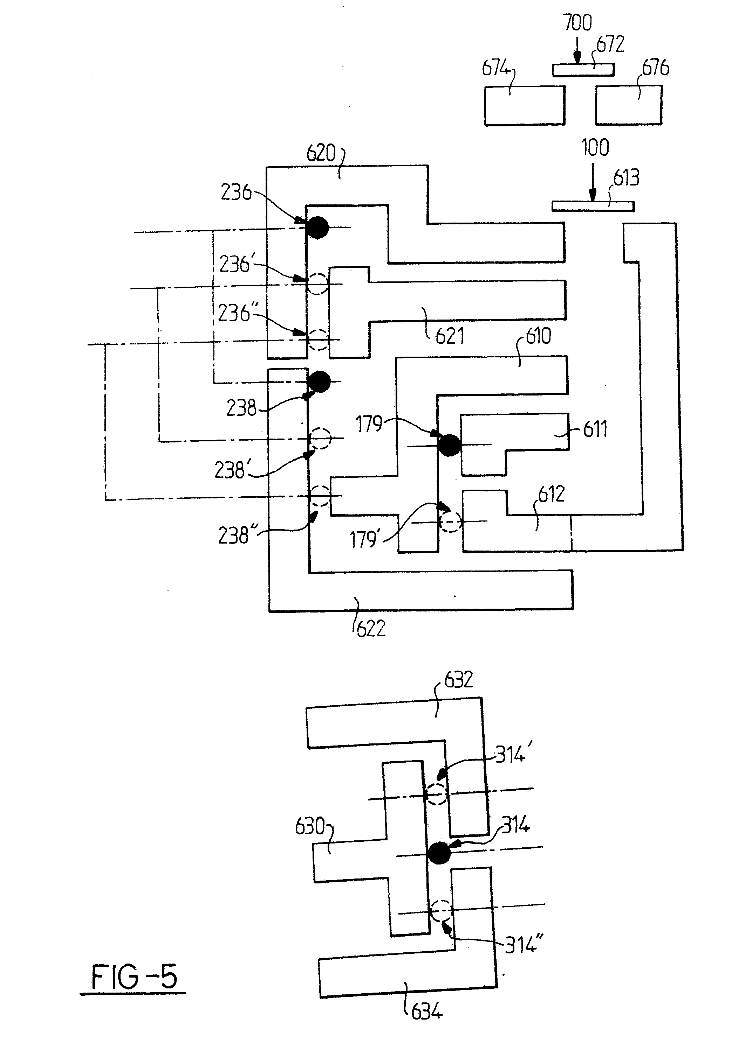

On va maintenant décrire un mode de réalisation considéré actuellement comme préférentiel, mais non limitatif, de l'ensemble de connexions 600 en regard de l'illustration donnée sur la figure 5.

L'ensemble de connexions 600 comprend des contracts d'un premier type formé de trois lamelles 610, 611 et 612.

La lamelle 610 constitue une lamelle d'alimentation intermédiaire dont la fonction sera décrite plus en détail par la suite.

La fonction 611 assure l'alimentation des filaments code du véhicule automobile.

La lamelle 612 assure l'alimentation des filaments phare du véhicule automobile.

Le plot de contact 179 porté par l'organe inverseur 170 se déplace entre une position de repos (figures 7a et 7b) illustrée sous la référence 179 sur la figure 5 dans laquelle le plot 179 relie les lamelles 610 et 611 pour assurer l'alimentation des filaments code si la lamelle 610 est sous tension, et une position de travail (figure 7c) représentée en traits interrompus sous la référence 179′ sur la figure 5 dans laquelle le plot 179 relie la lamelle 610 et la lamelle 612 pour assurer l'alimentation des filaments phare du véhicule automobile.

Bien entendu, le déplacement du plot de contact 179 entre les deux positions précitées est défini par le basculement de l'organe inverseur 170 autour de l'axe 171.

L'ensemble de connexions 600 comprend également des contacts d'un second type formés de trois lamelles 620, 621, 622 et de la lamelle 610 précitée.

La lamelle 620 est reliée à la borne d'alimentation positive des accumulateurs du véhicule automobile.

La lamelle 621 assure l'alimentation des filaments lanternes du véhicule automobile.

La lamelle 622 correspond à une borne d'alimentation positive des filaments code et phare.

L'indexation définie sur la manette 200 par la coopération des dentures 220 et 222 définit trois positions stables pour le coulisseau 230.

Dans une première de ces positions (figure 7a), le plot de contact 236 repose contre la lame 620 mais est séparé de la lamelle 621 de telle sorte que celle-ci soit isolée, tandis que le plot de contact 238 repose contre la lamelle 622 mais est séparé de la lamelle 610. Aucune des lamelles 621, 610, 611 et 612 n'est reliéé à une borne d'alimentation positive. Aucun des filaments lanterne, code et phare n'est alimenté.

Dans une seconde position (figure 7b) représentée en traits interrompus et sous la référence 236′ et 238′ sur la figure 5, le plot de contact 236′ relie la lame 620 et la lamelle 621. Le plot 238′ est toujours en contact avec la lamelle 622, mais isolé de la lamelle 610.

Le filament lanterne 621 est donc relié à la borne d'alimentation positive 620 par l'intermédiaire du plot de contact 236′.

Par contre la lamelle 610 est toujours séparée de la lamelle 622. De ce fait, les filaments code et phare reliés aux lamelles 611 et 612 ne peuvent être alimentés.

Enfin, dans une troisième position (figure 7c) représentée en traits interrompus sous les réfé-

rences 236″ et 238″ sur la figure 5, le plot de contact 236 relie toujours la lamelle 620 et la lamelle 621, mais le plot de contact 238 relie maintenant la lamelle 622 et la lamelle 610.

De ce fait, le filament lanterne connecté à la lamelle 621 reste alimenté. De plus, la lame 610 est relié à la tension positive d'alimentation. De ce fait l'un ou l'autre des filaments code ou phare, sélectionné par la position du plot 179 et donc la position de l'organe inverseur 170, est alimenté.

L'ensemble de connexions 600 comprend également des contacts d'un troisième type formés d'une lamelle centrale 630 et deux lamelles latérales 632, 634. Ces lamelles coopèrent avec le plot de contact 314 porté par la chape de commande 300.

Dans la position de repos de la chape de commande 300, dans laquelle le galte 312 repose contre le fond de la came 408, le plot de contact 314 repose contre la lamelle 630 mais est séparé des lamelles de contact 632, 634. Aucun des indicateurs de changement de direction du véhicule automobile n'est alimenté.

Lorsque la chape de commande 300 pivote autour de l'axe 302 le plot de contact 314 relie la lamelle de contact 630 avec l'une ou l'autre des lamelles latérales 632, 634 pour alimenter le filament d'un indicateur de changement de direction associé.

L'ensemble de connexions 600 comprend de plus des contacts d'un quatrième type formés de deux contacts 674, 676 et d'une lamelle souple 672.

La lamelle 672 est adaptée pour relier les plots 674, 676 lors d'un basculement de la palette 700 induit par la translation de la manette 200, parallèlement à l'axe 202, à l'encontre de la sollicitation élastique du ressort 212. La liaison ainsi établie entre les plots 674, 676 permet d'alimenter les avertisseurs sonores.

Enfin, l'ensemble de connexions 600 comprend de préférence une lamelle 613 libérée par le pivotement initial de l'étrier support 100 autour du premier axe 102 pour relier les lames 620 et 612 afin de réaliser des appels phare.

On va maintenant décrire le fonctionnement du dispositif commutateur conforme à la présente invention.

Lors du pivotement de l'étrier support 100, autour du premier axe 102, comme schématisé par la flèche référencée A, les galets 126, 128 roulent sur les cames associées et réalisées sur la chape support 300, et compriment les ressorts de sollicitation 122, 124.

Le doigt de commande 112 engagé dans la rainure 152 induit une translation du tiroir 150 dans la direction 154, et une translation similaire de la biellette 160. La dent 164 de celle-ci vient en prise avec l'une ou l'autre des cames 182, 183. Si le pivotement de l'étrier support 100 autour du premier axe 102 est limité, la dent 164 de la biellette ne déplace pas les cames 182, 183 mais le doigt de commande 112 libère la palette 613 pour réaliser des appels phare.

Par contre, si le pivotement de l'étrier 100 autour de l'axe 102 est plus ample, la dent 164 après avoir glissé contre l'une ou l'autre des surfaces 192, 194, vient reposer contre le fond 191, 193 d'une came 182 ou 183.

La dent 164 applique un couple de pivotement autour de l'axe 171 sur la pièce 184.

Si le coulisseau 230 est placé dans sa plage de libération (figure 7c), ce couple de pivotement exercé sur la pièce 184 induit une rotation de la pièce 184 et de l'organe inverseur 170, indexé par le plot 180 autour de l'axe 171. La protubérance 198 se déplace dans la cavité 242.

Le plot de contact 179 se déplace entre la lamelle 610 et l'une des lamelles 611, 612, pour assurer une inversion de la fonction code/phare.

Par contre, si le coulisseau 230 est placé dans sa plage de blocage (figure 7a et 7b) l'organe inverseur 170 est immobilisé dans sa position de repos. La pièce 184 peut pivoter légèrement en déformant élastiquement la lame souple 186. Le plot de contact 179 n'est pas déplacé.

Lorsque la manette 200 commandant le pivotement de l'étrier support 100 autour de l'axe 102 est relâchée, les ressorts 122, 124 reportent l'étrier support dans sa position initiale stable.

De même le tiroir 150 et la biellette 160 reprennent leur position initiale.

Par contre, l'organe inverseur 170 indexé par le plot 180 reste dans la position précédente.

Le pivotement suivant de l'étrier support 100 autour du premier axe 102 assure un nouveau déplacement en translation du tiroir 150 et de la biellette 160, dans la direction 154. La dent 164 vient alors en prise avec l'autre came 183 ou 182 pour faire pivoter la pièce 184 et l'organe inverseur 170 dans l'autre sens si le coulisseau 230 est toujours dans la plage de libération.

On assure alors une nouvelle inversion de la fonction code/phare.

On remarquera que le pivotement de l'étrier support 100 et la translation du tiroir 150 et de la biellette 160 n'agissent que sur les contacts du premier type associés au plot 179 et n'agissent pas sur les autres contacts.

La rotation de la manette 200 autour du second axe 202, comme illustré par la flèche référencée B, induit un pivotement du téton de commande 132 qui provoque une translation du coulisseau 230 dans la direction 232. Comme indiqué précédemment ce déplacement est indexé par la coopération des dentures 220, 222. Les plots 236, 238 assurent respectivement l'alimentation de la lamelle lanterne 621 et de la lamelle d'alimentation intermédiaire 610.

Lorsque l'organe inverseur 170 est dans sa position de repos (figures 7a, 7b) dans laquelle le plot de contact 179 relie les lamelles 610 et 611, le déplacement en translation du coulisseau 230 n'agit pas sur l'organe inverseur 170.

Par contre, lorsque l'organe inverseur 170 est dans sa position de travail dans laquelle le plot 179 relié les lamelles 610 et 612, ce qui ne peut intervenir que lorsque le coulisseau 230 est placé la plage de libération (figure 7c), la translation du coulisseau 230 de cette plage de libération vers la plage de blocage (figure 7c à figure 7b) porte la protubérance 198 en appui avec une surface latérale de la cavité 242 ménagée sur le coulisseau 230 pour déplacer l'organe inverseur 270 vers la position de repos précitée.

Ainsi, on obtient une réinitialisation automatique en position code des contacts du premier type, lorsque la manette de sélection 200 est reportée de sa position route vers la position ville.

Là encore, on remarquera que le déplacement à pivotement de la manette 200, autour du second axe 202, pour commander les contacts du second type n'agit que sur ceux-ci et n'intervient pas sur les autres contacts.

Lors du pivotement de la chape de commande 300 (ainsi que de l'étrier support 100 et de la manette 200) autour du troisième axe 302, le galet 312 glisse sur la came centrale 408 et comprime le ressort 310. Si le galet 312 n'atteint pas l'une des cames latérales 410, 412, la chape de commande 300 reste dans une position instable et est reportée dans sa position de repos initial par le ressort 310 dès que l'effort de pivotement exercé sur la chape de comande 300 est interrompu.

Par contre, lorsque le galet 312 atteint l'une des cames latérales 410, 412, la chape de commande 300 est indexée en position stable.

Le déplacement en pivotement de la chape de commande 300 de part et d'autre de sa position de repos déplace le plot 314 en appui permanent sur la lamelle 630, contre l'une ou l'autre des lamelles latérales 632, 634 pour commander l'un des indicateurs de changement de direction.

On remarquera que le pivotement de la chape 300 autour du troisième 302 n'agit que sur les contacts du troisième type 630, 632, 634 et n'intervient pas sur les autres contacts.

Au cours du pivotement de la chape 300 autour du troisième axe 302, le doigt de commande 112 se déplace dans la rainure cylindrique 152.

Enfin, la translation de la manette 200, parallèlement au second axe 202 induit un pivotement de la palette 700 autour de l'axe 714.et porte l'aile 712 en appui contre la lamelle 672 pour relier les plots 674, 676. Ainsi, les avertisseurs sonores du véhicule sont alimentés.

Là encore, le déplacement en translation de la manette 200, parallèlement au second axe 202, n'agit que sur les contacts du quatrième type 672, 674, 676 et n'agit pas sur les autres contacts.

Enfin, on remarquera que chacun des quatre mouvements précités A, B, C, D permet de commander les contacts électriques associés, indépendamment des trois autres mouvements, c'est-à-dire quelle que soit la position du commutateur selon les trois autres mouvements, à la seule exception près que l'organe inverseur 170 ne peut être déplacé de sa position de repos vers sa position de travail que lorsque le coulisseau 230 est dans sa plage de libération.

A titre d'exemple, la mouvement de translation D de la manette 200 peut être obtenu quelle que soit la position de l'étrier support 100 dans son pivotement A autour du premier axe 102, quelle que soit la position de la manette 200 dans son pivotement B autour de l'axe 202 et quelque soit la position de la chape 300 dans son pivotement C autour du troisième axe 302.

Par ailleurs, les quatre mouvements A, B, C, D peuvent être obtenus en actionnant le bouton 210 seul.

En effet, l'étrier support 100 et la manette 200 sont liés à rotation avec la chape 300 pour un pivotement autour du troisième axe 302.

De façon similaire la manette 200 est liée à rotation avec l'étrier support 100 pour un pivotement autour du premier axe 102.

**Revendications**

1. Commutateur pour véhicules automobiles du type comportant :
- une platine (400) qui porte un étrier support (100) à pivotement autour d'un premier axe (102),
- une manette (200) montée à rotation sur l'étrier support (100) autour d'un second axe (202), transversal au premier, - un tiroir (150) monté à translation sur la platine dans une première direction (154), et commandé à déplacement dans cette première direction par le pivotement de l'étrier support (100) autour du premier axe (102), pour contrôler un premier type de contacts électriques (610, 611, 612),
- un coulisseau (230) formant un second organe de commutation monté à translation sur la platine dans une seconde direction (232) transversale à la première direction, et commandé à déplacement dans cette seconde direction par la rotation de la manette (200) autour du second axe (202), pour contrôler un second type de contacts électriques (620, 621, 622, 610), caractérisé par le fait qu'il comprend en outre :
- une biellette (160) reliée au tiroir (150) pour suivre les déplacements à translation de celui-ci dans la première direction (154), et
- un organe inverseur (170) formant un premier organe de commutation contrôlant le premier type de contacts électriques (610, 611, 612), monté à pivotement entre deux positions sur la platine (400) et associé à une paire de cames d'entraînement (182, 183), telles que les cames (182, 183) soient alternativement placées en regard de la biellette (160) selon la position de l'organe inverseur (170) et que les entraînements successifs à pivotement de l'étrier support (100), autour du premier axe (102) portent alternativement la biellette (160) en prise avec l'une ou l'autre des cames (182, 183) pour déplacer l'organe inverseur (170) alternativement entre ses deux positions.

2. Commutateur pour véhicules automobiles selon la revendication 1, caractérisé par le fait que le coulisseau (230) est déplacé en translation dans la second direction (232) entre une plage de libération et une plage de blocage, et par le fait que le coulisseau (230) possède une structure de blocage qui n'autorise le pivotement de l'organe inverseur (170) entre ses deux positions que lorsque le coulisseau (230) est placé dans la plage de libération.

3. Commutateur pour véhicules automobiles du type comportant :
- une platine (400) qui porte un étrier support (100) à pivotement autour d'un premier axe (102),
- une manette (200) montée à rotation sur l'étrier support (100) autour d'un second axe (202) transversal au premier,
- un organe de commutation principal (150, 170) guidé par la platine (400) et commandé à déplacement par le pivotement de l'étrier support (100) autour du premier axe (102), pour contrôler un premier type de contacts électriques (610, 611, 612),
- une organe de commutation auxiliaire (230) guidé par la platine (400) et commandé à déplacement par la rotation de la manette (200) autour du second axe (202) pour contrôler un second type de contacts électriques (620, 621, 622, 611), caractérisé par le fait que le déplacement de l'un premier des deux organes de commutation (170) est interdit par une structure de blocage prévue sur le second organe de commutation (230) lorsque ce dernier est placé sur une plage donnée, de blocage, de son déplacement.

4. Commutateur pour véhicules automobiles selon l'une des revendications 1 à 3, caractérisé par le fait que le premier organe de commutation (170) est déplacé entre une position de repos et une position de travail, le second organe de commutation (230) est déplacé entre une plage de libération dans laquelle le premier organe de commutation (170) peut être déplacé entre la position de repos et la position de travail, et une plage de blocage dans laquelle le premier organe de commutation (170) est immobilisé en position de repos par une structure de blocage solidaire du second organe de commutation (230), et par le fait que la structure de blocage est adaptée pour déplacer le premier organe (170) vers la position de repos lorsque le second organe (230) est déplacé de la plage de libération à la plage de blocage.

5. Commutateur pour véhicules automobiles selon l'une des revendications 1 à 4, caractérisé par le fait que l'étrier support (100) est monté à pivotement autour du premier axe (102) sur une chape de commande (300) elle-même montée à pivotement sur la platine (400) autour d'un troisième axe (302) pour contrôler un troisième type de contacts (630, 632, 634) au cours de son pivotement.

6. Commutateur pour véhicules automobiles selon l'une des revendications 1 à 5, caractérisé par le fait que la manette (200) peut coulisser à translation (D) parallèlement au second axe (202) pour contrôler un quatrièreme type de contacts (672, 674, 676) au cours de son déplacement.

7. Commutateur pour véhicules automobiles selon l'une des revendications 1 à 6, caractérisé par le fait que la biellette (160) est supportée élastiquement (156) par le tiroir (150) pour pouvoir pivoter de part et d'autre d'une position de repos lorsqu'elle vient en prise avec l'une ou l'autre des cames (182, 183).

8. Commutateur pour véhicules automobiles selon l'une des revendications 1 à 7, caractérisé par le fait que les cames (182, 183) sont solidaires de l'organe inverseur (170).

9. Commutateur pour véhicules automobiles selon l'une des revendications 1 à 7, caractérisé par le fait que les cames (182, 183) sont formées sur une pièce (184) indépendante de l'organe inverseur (170) et supportée élastiquement (186) par celui-ci.

10. Commutateur pour véhicules automobiles selon l'une des revendications 1 à 9, caractérisé par le fait que le premier organe de commutation (170) est indexé dans ses déplacements par un plot (180) sollicité par ressort.

11. Commutateur pour véhicules automobiles selon l'une des revendications 1 à 10, caractérisé par le fait que l'étrier support (100) est indexé dans ses déplacemnts par au moins un plot (120, 128, 118, 126) sollicité par ressort (122, 124).

12. Commutateur pour véhicules automobiles selon l'une des revendications 1 à 11, caractérisé par le fait qu'il comprend une enveloppe tubulaire (206) guidant la manette (200) à pivotement autour du second axe (202), et par le fait que la manette (200) est indexée dans ses déplacements par des dentures (222) réalisées sur la face de l'enveloppe dirigée vers l'extrémité de commande de la manette (200), dentures (222) qui coopèrent avec une couronne crantée (214) liée à rotation avec la manette.

13. Commutateur pour véhicules automobiles selon la revendication 12, caractérisée par le fait que la couronne crantée (214) est sollicitée par ressort (212) contre les dentures (222) réalisées sur l'enveloppe tubulaire, la couronne crantée (214) étant libre de translation par rapport à la manette, parallèlement au second axe (202).

14. Commutateur pour véhicules automobiles selon l'une des revendications 1 à 13, caractérisé par le fait que les contacts du premier type (610, 611, 612) sont adaptés pour assurer une inversion des fonctions code/phare.

15. Commutateur pour véhicules automobiles selon l'une des revendications 1 à 14, caractérisé par le fait que les contacts du second type (620, 621, 622, 610) sont adaptés pour assurer une sélection du mode éclairage arrêt/ville/route.

16. Commutateur pour véhicules automobiles selon l'une des revendications 1 à 15, prise en combinaison avec la revendication 5, caractérisé par le fait que les contacts du troisième type (630, 632, 634) sont adaptés pour commander les indicateurs de changement de direction d'un véhicule automobile.

17. Commutateur pour véhicules automobiles selon l'une des revendications 1 à 16 prise en combinaison avec la revendication 6, caractérisé par le fait que les contacts du quatrième type (672, 674, 676) sont adaptés pour commander les avertisseurs sonores d'un véhicule automobile.

18. Commutateur pour véhicules automobiles selon l'une des revendications 1 à 17, prise en combinaison avec l'une des revendications 2 ou 3, caractérisé par le fait que la structure de blocage prévue sur le second organe de commutation est formé d'une paroi latérale (241) de ce second organe dirigée vers le premier organe et d'une cavité (242) ménagée dans cette paroi latérale et coopérant avec une protubérance (198) solidaire du premier organe.

FIG -1

FIG-2

FIG -3

FIG-4

FIG-6

0248716

0248716

FIG-5

0248716

_FIG -7a_

_FIG -7b_

_FIG -7c_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 129 004 (KABUSHIKI KAISHA TOKAI RIKA DENKI SEISAKUSHO) * Figure 1 * | 1,3 | B 60 Q 1/14 H 01 H 13/60 |
| A | US-A-4 293 743 (IWATA) * Figure 2 * | 1,3 | |
| A | US-A-4 315 117 (KOKUBU) * Figure 5 * | 1,3 | |

----

DOMAINES TECHNIQUES
RECHERCHES (Int. Cl.4)

B 60 Q
H 01 H

Le présent rapport de recherche a été établi pour toutes les revendications

| Lieu de la recherche | Date d'achèvement de la recherche | Examinateur |
|---|---|---|
| LA HAYE | 07-09-1987 | ONILLON C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82